# FASCICULE DE BREVET EUROPEEN

(11) **EP 0 593 320 B1**
(45) Date de publication et mention de la délivrance du brevet: **20.05.1998**
(21) Numéro de dépôt: 93402232.8
(22) Date de dépôt: 14.09.1993
(51) Int. Cl.: H04Q 7/38

(54) **Procédé de transmission d'une information d'avance temporelle à un mobile évoluant dans un réseau de radiotéléphonie cellulaire, mobile, contrôleur et système d'échange d'informations mettant en oeuvre un tel procédé**
Verfahren zur Übertragung einer Zeitverschiebungsnachricht an ein Fahrzeug das sich in einem zellularen Funkfernsprechnetz bewegt sowie Fahrzeug, Steuerungsvorrichtung, und Nachrichtenaustauschanordnung die dieses Verfahren verwenden
Transmission method of time advance information to a mobile moving in a cellular radio telephone network, mobile, controller and information exchange system using this method

(30) Priorité: 15.09.1992 FR 9210996
(43) Date de publication de la demande: 20.04.1994
(73) Titulaire: ALCATEL ALSTHOM COMPAGNIE GENERALE D'ELECTRICITE, 75008 Paris (FR)
(72) Inventeur: Dupuy, Bernard c/o Alcatel Radiotéléphone, 92707 Colombes Cedex (FR); Roberts, Michael, Saffron Walden, Essex (GB)
(74) Mandataire: Schaub, Bernard

(56) Documents cités:
- EP-A- 0 210 396
- EP-A- 0 241 565
- EP-A- 0 398 773

## Description

Le domaine de l'invention est celui de la transmission d'informations temporelles à des mobiles évoluant dans un réseau de radiotéléphonie cellulaire, tel que par exemple un réseau GSM (Groupe Spécial Mobile), lorsque ces mobiles passent d'une cellule à une autre. Les mobiles sont par exemple constitués de radiotéléphones embarqués dans des véhicules et les informations temporelles transmises doivent permettre à un mobile qui passe d'une cellule à une autre, d'avancer temporellement l'émission des informations numériques qu'il doit transmettre, afin d'être en synchronisme avec la station émettrice-réceptrice de la nouvelle cellule. Dans la terminologie GSM, une telle procédure est couramment appelée "handover" et ce terme sera repris par la suite.

La description qui va suivre reprend les termes couramment utilisés dans la terminologie GSM. Pour plus d'informations, on peut se référer à la revue "Digital Cellular Mobile Communication Seminar" du séminaire tenu à ce sujet du 16 au 18 octobre 1990 à Nice.

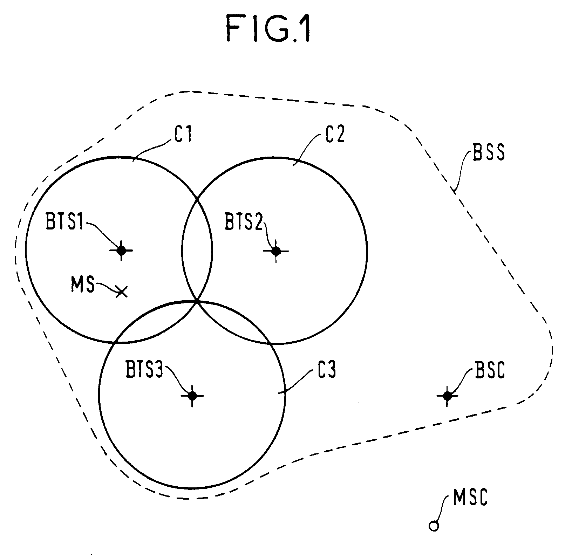

La figure 1 représente la structure d'un réseau de radiotéléphonie cellulaire, tel qu'un réseau de type GSM.

Un mobile, noté MS et par exemple constitué par un radiotéléphone, évolue dans une cellule C1 constituée par la couverture géographique d'une station émettrice-réceptrice de base, notée BTS1. D'autres cellules C2, C3 comprennent chacune une station émettrice-réceptrice de base BTS2, BTS3. Chacune de ces stations BTS1 à BTS3 constitue une des composantes du réseau GSM et comprend un ou plusieurs émetteurs-récepteurs, associés chacun à une antenne et à de l'équipement de traitement. Les cellules se recouvrent partiellement de telle sorte qu'il n'y ait pas de zone d'ombre. Les stations BTS1 à BTS3 sont gérées par un contrôleur de station de base, noté BSC. Le contrôleur BSC a notamment pour fonction de gérer les canaux de fréquence des stations BTS. Un contrôleur BSC associé à un certain nombre de stations BTS constitue un système de station de base, noté BSS. D'autres contrôleurs peuvent également être prévus, chacun pilotant un nombre de stations BTS prédéterminé, et étant chacun relié à un centre de commutation, noté MSC, qui est la structure maître d'un réseau GSM. Un MSC donné peut donc piloter le fonctionnement de plusieurs systèmes BSS constituant un réseau mobile de terrain public, couramment appelé PLMN.

Le fonctionnement d'un tel réseau est le suivant: le mobile MS envoie des trains de données numériques sous forme de paquets à la station BTS1 aussi longtemps qu'il se situe dans la cellule C1 et la station BTS1 retransmet ces trains vers le contrôleur BSC qui les transmet à leur destinataire par l'intermédiaire du commutateur MSC. Le destinataire peut être constitué par une station mobile ou fixe.

Chaque paquet de données, constituant par exemple des données de parole, est transmis dans un intervalle de temps de durée 577 µs, huit intervalles de temps successifs constituant une trame. Huit stations mobiles MS peuvent donc communiquer sur le même canal radio, c'est à dire avec la même fréquence porteuse, grâce à l'accès multiple à répartition dans le temps (AMRT ou en anglais TDMA). Habituellement, deux à quatre canaux sont affectés à chaque station BTS et 16 à 32 canaux radio sont donc disponibles à l'émission (comme pour la réception) au niveau de chaque cellule.

Un des problèmes du système GSM est la synchronisation des intervalles de temps affectés à un mobile MS par rapport à l'horloge maître située au niveau de la station BTS. En effet, il est nécessaire de tenir compte du temps de propagation des ondes radio entre un mobile MS et sa station de base BTS puisque les mobiles et la station BTS dont ils dépendent ont chacun une horloge bit interne qui leur est propre. Comme un intervalle de temps dure 577 µs, et sachant qu'une onde radio parcourt 300 m en 1 µs (3x10⁸ m/s), la base de temps du mobile MS doit tenir compte de ce décalage temporel, de 1 µs par 300 m de distance séparant le mobile MS de sa station BTS, pour ne pas émettre de données pendant l'intervalle de temps affecté à un autre mobile.

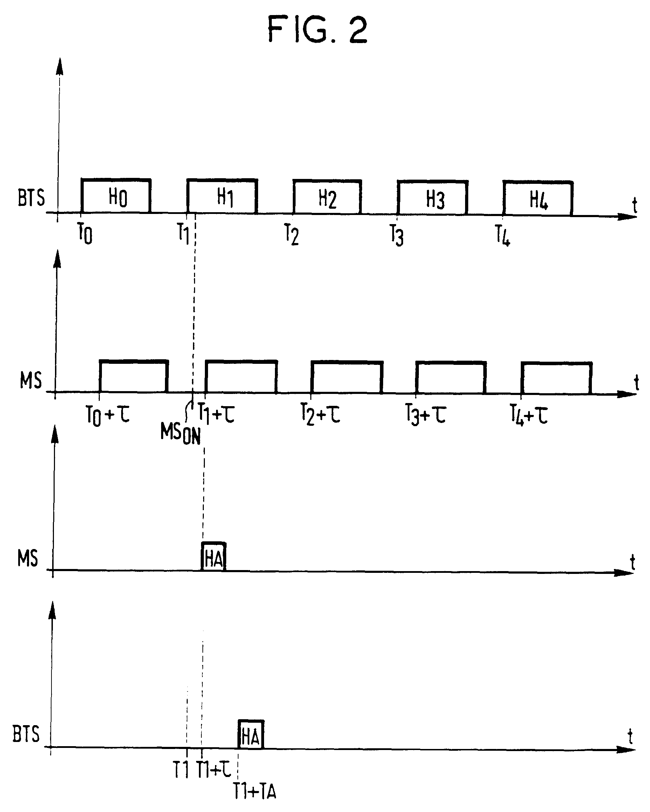

La figure 2 est un chronogramme corrélatif de signaux émis par la station BTS1 et par le mobile MS et montre comment le décalage temporel adéquat est communiqué au mobile.

La station BTS1, qui gère la cellule dans laquelle se trouve le mobile MS, émet régulièrement, à des instants référencés T₀, T₁, T₂, T₃ et T₄, et sur un canal de synchronisation SCH (Synchronisation CHannel) appartenant à un canal commun spécifique appelé BCCH (Broadcast Common CHannel) destiné de manière générale à transmettre des informations de synchronisation aux mobiles, un signal d'horloge H₀, H₁, H₂, H₃, H₄. Ce signal est utilisé lorsque le mobile MS doit être rattaché à une cellule du réseau GSM, par exemple lors de sa mise sous tension ou alors, comme il sera précisé par la suite, en cas de handover.

Le mobile MS se connecte pour la première fois au réseau après avoir été mis sous tension, il ne peut recevoir le signal d'horloge qu'à partir de l'instant, noté MS_{ON}, où il est mis sous tension.

Etant donné que le mobile MS ne se trouve pas, en général, au pied de la station de base BTS1, le premier signal d'horloge qu'il reçoit après l'instant MS_{ON}, ici le signal H₁, est décalé d'un temps noté τ par rapport à son instant d'émission T₁ par la station de base BTS1. Le signal H₁ est donc reçu par le mobile à l'instant T₁+τ.

A cet instant, le mobile MS qui souhaite se connecter à la station BTS1 envoie vers cette dernière, sur un canal de signalisation, un message d'accès appelé Random Access et constitué par un Access Burst. Dans le cas d'un handover, ce message est appelé Handover Access et noté HA. Chaque Handover Access a une durée inférieure à celle d'un burst constituant un signal normal (appelé Normal Burst) contenant par exemple des données de parole, de sorte qu'il ne peut interférer avec les signaux émis par un autre mobile dans un autre intervalle de temps.

A la réception de ce signal (temps T₁+TA), la station BTS1 peut déterminer le temps TA (pour Timing Advance ou en français avance temporelle) séparant cette réception de l'émission du signal d'horloge H₁. Ce temps TA correspond à deux fois le temps de transmission d'un signal entre le mobile MS et la station BTS1 c'est-à-dire à deux fois le temps τ. La station BTS1 envoie alors, sur un canal de signalisation appelé AGCH (Access Grant CHannel), un message au mobile MS pour lui indiquer qu'il doit émettre ses signaux avec une avance de TA par rapport à son signal d'horloge : le mobile peut alors émettre des signaux normaux sans risque de recouvrement avec ceux émis par d'autres mobiles. De ce fait, on est assuré que les signaux émis par les différents mobiles sur un canal de transmission donné arrivent bien successivement à la station BTS1.

De ce fait, on est assuré que les signaux émis par les différents mobiles sur un canal de transmission donné arrivent bien successivement à la même station BTS, sans qu'il n'y ait de recouvrement de ces signaux. Il est cependant nécessaire d'effectuer fréquemment une opération de synchronisation des mobiles puisque leur distance par rapport à la station BTS avec laquelle ils communiquent peut évoluer.

Un problème connu est celui de gérer le passage du mobile MS d'une cellule à une autre. Sur la figure 1, le mobile MS reçoit non seulement des signaux de BTS1, mais également de BTS2 et de BTS3, et, lorsque la puissance des signaux reçus de BTS1 devient inférieure à celle des signaux reçus par exemple de BTS2, le BSC connecte le mobile MS à la station BTS2 qui va assurer la poursuite de la transmission. Cette situation est typique lorsque le mobile MS s'éloigne de BTS1 et se rapproche de BTS2. Il est alors nécessaire de modifier l'information d'avance temporelle TA, pour que le mobile se synchronise sur la station BTS2 de la nouvelle cellule C2.

On connaît trois types de handover permettant d'assurer une telle synchronisation: le handover synchrone, le handover pseudo-synchrone et le handover asynchrone, selon que les stations sont respectivement synchronisées, ont une horloge interne de même fréquence de déphasage connu, ou que leurs horloges sont asynchrones et que le déphasage entre ces horloges est inconnu.

Le handover synchrone consiste à piloter les horloges des différentes stations BTS d'un système GSM donné de telle sorte que leurs signaux d'horloge soient synchrones. Ainsi, lorsqu'un mobile passe d'une cellule à une autre, il n'est pas nécessaire de lui fournir une nouvelle information d'avance temporelle, puisque celle-ci est immédiatement déduite de celle qu'il utilisait antérieurement. Cependant, cette solution suppose, pour être généralisée, de synchroniser toutes les stations BTS et sa mise en oeuvre est donc coûteuse.

Pour pallier cet inconvénient, on utilise le handover pseudo-synchrone qui permet de synchroniser un mobile sur l'horloge de la station de la nouvelle cellule en prenant en compte le décalage temporel existant entre les horloges de l'ancienne et de la nouvelle station. Ce type de handover est par exemple décrit dans la demande de brevet européen n°0.398.773 de MATRA COMMUNICATION publiée le 22 novembre 1990. Cette solution présente l'inconvénient d'être complexe à mettre en oeuvre et nécessite une phase d'apprentissage pour le système BSS.

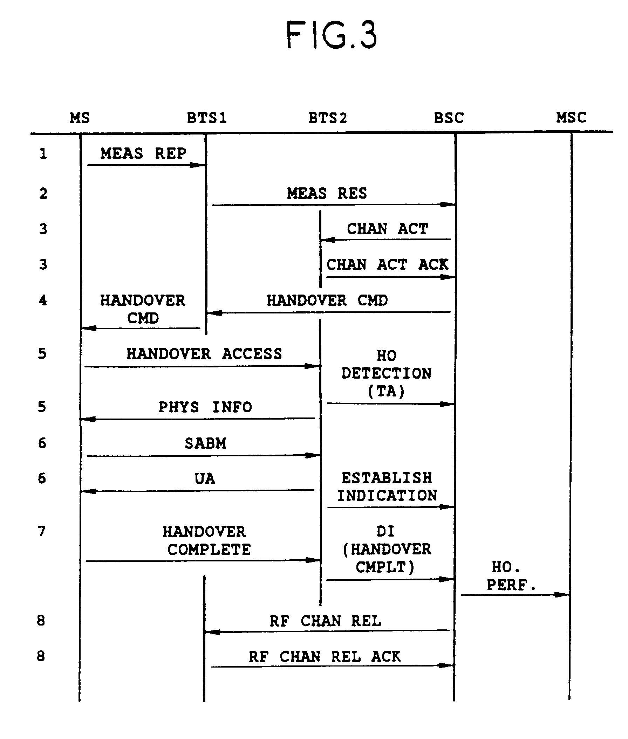

Le handover asynchrone est le plus fréquemment rencontré et le plus simple à mettre en oeuvre. Son principe est représenté à la figure 3. On se placera dans le cas où le mobile MS quitte la cellule C1 pour entrer dans la cellule C2. Huit étapes de transmission successives sont ici nécessaires.

A l'étape 1, le mobile MS envoie un message MEAS REP à la station BTS1. Ce message est assimilable à une demande de changement de cellule, est normalisé et se produit toutes les 0,5 secondes. A l'étape 2, la station BTS1 transmet cette information (message MEAS RES) au contrôleur BSC qui décide d'effectuer une procédure de handover. Cette décision est notamment prise lorsque le message MEAS REP indique que le mobile MS ne reçoit plus dans les meilleures conditions et que par exemple le mobile reçoit mieux les signaux émis périodiquement par la station BTS2 que ceux émis par la station BTS1. Le contrôleur BSC et le centre de commutation MSC peuvent également décider d'eux même si un handover est nécessaire, en prenant en compte d'autres critères de décision. A l'étape 3, le contrôleur BSC active un canal de la station BTS2 (message CHAN ACT) et la station BTS2 acquitte l'allocation (message CHAN ACT ACK). A l'étape 4, le contrôleur BSC envoie un ordre de handover (message HANDOVER CMD) à la station BTS1 qui le retransmet immédiatement au mobile MS de manière transparente. Commence alors la procédure de handover au niveau du mobile MS (étape 5) qui envoie des messages HA de synchronisation successifs (HANDOVER ACCESS) à BTS2 avec une avance temporelle nulle, c'est à dire sans tenir compte de l'éloignement. Cette étape a été précédemment illustrée à la figure 2. La nouvelle information d'avance temporelle que le mobile MS doit utiliser ne lui est en effet pas connue et c'est la station BTS2 qui la lui fournit après l'avoir calculée (message PHYS INFO contenant entre autre l'indication TA). La station BTS2 envoie également un message HO DETECTION (TA) au contrôleur BSC. A l'étape 6, le mobile MS envoi un message de connexion SABM à la station BTS2 en prenant acte de la nouvelle synchronisation. La station BTS2 en informe le contrôleur BSC (message ESTABLISH INDICATION) et signale au mobile MS (message UA) qu'il a bien été entendu. A l'étape 7, le mobile MS envoie un message HANDOVER COMPLT à la station BTS2 pour l'informer que la procédure de handover est terminée et cette station retransmet immédiatement ce message vers le contrôleur BSC. Le contrôleur BSC en informe alors le centre de commutation MSC (message HANDOVER PERFORMED). A l'étape 8, le contrôleur BSC s'adresse à la station BTS1 (message RF CHAN REL) pour rendre disponible l'intervalle de temps préalablement alloué au mobile MS et celle-ci lui répond (message RF CHAN REL ACK). A ce stade, le mobile MS dialogue avec la station BTS2 qui lui a alloué un intervalle de temps dans une trame véhiculée par une porteuse donnée, ainsi qu'une information d'avance temporelle TA.

Le principal inconvénient du handover asynchrone est que l'envoi de l'information d'avance temporelle TA au mobile est longue et nécessite environ 40 ms, auxquels il faut ajouter environ 10 ms de calcul de TA et le mobile ne peut continuer à émettre des données pendant ce temps. De plus, l'émission des signaux HA de synchronisation est imposée par le GSM et nécessite 5 ms par signal de synchronisation. D'autres délais participent à retarder le handover et il est fréquent que la communication soit coupée pendant plus de 100 ms. Il existe des logiciels d'extrapolation de la parole qui permettent de masquer une interruption de transmission, mais ceux-ci ne sont efficaces que pendant un temps subjectif, dépendant de l'oreille de l'interlocuteur. On s'accorde généralement à dire qu'au delà de 80 ms, l'interruption de communication est audible par un interlocuteur ayant une bonne oreille alors qu'un interlocuteur qui ne prête pas une attention particulière à la qualité des signaux de parole qui lui sont transmis peut ne pas remarquer avant 200 ms que ce qu'il entend n'est pas ce qui devrait lui être transmis (puisque les signaux sont générés par le logiciel d'extrapolation de parole).

Il en va de même de l'utilisateur du mobile qui ne peut recevoir des données de type phonie pendant que son mobile est en phase de handover. Cet inconvénient se manifeste notamment en milieu urbain où les cellules sont de taille réduite et où de nombreuses cellules peuvent être traversées pendant une conversation. Il s'en suit un désagrément d'utilisation d'un tel système.

La présente invention a notamment pour objectif de pallier ces inconvénients.

Plus précisément, un des objectifs de l'invention est de fournir un procédé de handover pouvant être appliqué à un réseau de radiotéléphonie cellulaire où les stations ne sont pas synchronisées, par exemple à un réseau de type asynchrone, le moins coûteux et le plus répandu, permettant de réduire le temps pendant lequel la communication est coupée lorsqu'un handover est effectué.

Un autre objectif est de fournir un mobile, une station, un contrôleur, ainsi qu'un système d'échange d'informations mettant en oeuvre un tel procédé de handover.

Ces objectifs, ainsi que d'autres qui apparaîtront par la suite, sont atteints grâce à un procédé d'échange d'informations dans un réseau de radiotéléphonie cellulaire entre notamment un mobile, au moins deux stations émettrices-réceptrices et un contrôleur des stations, les échanges d'information entre le mobile et les stations étant de type à accès multiple à répartition dans le temps, le procédé consistant à :
- transmettre du contrôleur au mobile, par l'intermédiaire d'une des stations, appelée première station, avec laquelle le mobile communique, une instruction lui indiquant qu'il doit interrompre sa communication avec la première station pour envoyer à une deuxième station une première séquence de signaux de synchronisation permettant à la deuxième station de calculer une information d'avance temporelle, la transmission de cette instruction étant effectuée lorsque le mobile passe d'une première cellule, correspondant à la couverture géographique de la première station, à une deuxième cellule, correspondant à la couverture géographique de la deuxième station ;
- fournir au mobile l'information d'avance temporelle calculée,
ce procédé étant caractérisé en ce que :
- l'instruction fournie au mobile est également indicative que le mobile doit continuer à communiquer avec la première station immédiatement après avoir envoyé à la deuxième station la première séquence de signaux de synchronisation ;
et en ce qu'il consiste également à :
- transmettre de la deuxième station au contrôleur l'information d'avance temporelle calculée ;
- transmettre du contrôleur au mobile, par l'intermédiaire de la première station, l'information d'avance temporelle calculée.

Ce procédé (handover interne) permet donc de limiter la coupure de communication entre le mobile et la première station à un temps correspondant à l'émission de la première séquence des signaux de synchronisation. Cette coupure dure environ 25 à 30 ms et entraîne une interruption de la parole de 60 à 80 ms qui peut être masquée par un logiciel d'extrapolation de parole.

Dans un mode de mise en oeuvre avantageux, le procédé consiste à transmettre du mobile à la deuxième station une seconde séquence de signaux de synchronisation après avoir reçu l'information d'avance temporelle calculée.

Cette dernière étape est identique à celle qui est mise en oeuvre dans un réseau de radiotéléphonie cellulaire à stations de base synchrones, ce qui a pour avantage de permettre au mobile d'utiliser une procédure connue et donc de ne pas compliquer la mise en oeuvre de l'invention au sein du mobile.

Dans le cas d'un handover externe (les deux stations de base n'appartiennent pas au même système BSS), le procédé de l'invention met en oeuvre un mobile, au moins une première et une deuxième stations émettrices-réceptrices, un premier et un deuxième contrôleurs pilotant respectivement la première et deuxième stations, et un commutateur pilotant les premier et deuxième contrôleurs. Les échanges d'information entre le mobile et les première et deuxième stations sont de type à accès multiple à répartition dans le temps, et le procédé consiste à :
- transmettre du premier contrôleur au mobile une instruction lui indiquant qu'il doit interrompre sa communication avec la première station avec laquelle il est en communication pour envoyer à la deuxième station une première séquence de signaux de synchronisation permettant à la deuxième station de calculer une information d'avance temporelle, la transmission de cette instruction étant effectuée lorsque le mobile passe d'une première cellule, correspondant à la couverture géographique de la première station, à une deuxième cellule, correspondant à la couverture géographique de la deuxième station ;
- fournir au mobile l'information d'avance temporelle calculée,
ce procédé de handover externe étant caractérisé en ce que :
- l'instruction fournie au mobile est également indicative que le mobile doit continuer à communiquer avec la première station immédiatement après avoir envoyé à la deuxième station la première séquence de signaux de synchronisation,
et le procédé consiste également à :
- transmettre de la deuxième station au deuxième contrôleur l'information d'avance temporelle calculée ;
- transmettre du deuxième contrôleur au commutateur l'information d'avance temporelle calculée ;
- transmettre du commutateur au premier contrôleur l'information d'avance temporelle calculée ;
- transmettre du premier contrôleur au mobile, par l'intermédiaire de la première station, l'information d'avance temporelle calculée.

La procédure est dans ce cas plus longue puisqu'elle suppose de faire transiter l'information d'avance temporelle par le commutateur qui pilote les deux contrôleurs.

Dans ce procédé de handover externe, il est également avantageux de prévoir une émission par le mobile, à l'attention de la deuxième station, d'une seconde séquence de signaux de synchronisation après qu'il ait reçu l'information d'avance temporelle calculée.

Préférentiellement, dans le cas d'une application du procédé de handover (interne ou externe) à un réseau de radiotéléphonie cellulaire de type GSM, l'information d'avance temporelle calculée est transmise de la deuxième station au contrôleur auquel elle est rattachée dans une information de détection de synchronisation.

Par la suite, dans le cas d'un handover de type externe, l'information d'avance temporelle calculée est également avantageusement transmise du deuxième contrôleur au commutateur et du commutateur au premier contrôleur dans une information de détection de synchronisation.

On profite ici de l'existence de bits non utilisés pour la transmission de l'information d'avance temporelle.

L'invention s'applique préférentiellement aux réseaux de radiotéléphonie cellulaires comportant des stations BTS asynchrones entre elles, le déphasage entre leurs signaux d'horloge étant inconnu.

La présente invention concerne également un mobile, tel qu'un radiotéléphone, utilisé dans un tel système. Ce mobile comprend des moyens d'émission et de réception de signaux et reçoit, de façon connue, une information d'avance temporelle lorsqu'il passe d'une première cellule, correspondant à la couverture géographique d'une première des stations avec laquelle le mobile est en communication, à une deuxième cellule, correspondant à la couverture géographique d'une deuxième des stations. Selon l'invention, ce mobile comporte en outre :
- des moyens de détection d'une instruction qui lui est transmise par la première station et qui lui indique d'une part qu'il doit interrompre sa communication avec la première station pour émettre une première séquence de signaux de synchronisation à l'attention de la deuxième station et d'autre part qu'il doit continuer à communiquer avec la première station immédiatement après avoir envoyé la première séquence de signaux de synchronisation à la deuxième station ;
- des moyens de détection d'un signal de commande qui lui est transmis par la première station, le signal de commande comprenant l'information d'avance temporelle.

Le mobile peut également comprendre des moyens de décision d'émission d'une seconde séquence de signaux de synchronisation à l'attention de la deuxième station lorsqu'il reçoit le signal de commande comprenant l'information d'avance temporelle.

L'invention concerne également un contrôleur de stations émettrices-réceptrices d'un réseau de radiotéléphonie cellulaire où évolue au moins un mobile, ce contrôleur comportant :
- des moyens de réception d'une information d'avance temporelle qui lui est transmise dans un message émis par une station, appelée deuxième station, avec laquelle le mobile veut communiquer, suite à l'émission d'un message de synchronisation par le mobile à l'attention de la deuxième station lorsque celui-ci passe d'une première cellule, correspondant à la couverture géographique d'une première des stations avec laquelle le mobile est en communication, à une deuxième cellule, correspondant à la couverture géographique de la deuxième station;
- des moyens d'émission d'un signal de commande à l'attention de la première station, le signal de commande comprenant l'information d'avance temporelle destinée au mobile.

Ce contrôleur comporte avantageusement également des moyens d'émission d'une information comprenant l'information d'avance temporelle calculée à l'attention d'un commutateur, l'information transmise au commutateur étant transmise à la réception du message émis par la deuxième station.

L'invention concerne également un système d'échange d'informations entre un mobile, au moins deux stations émettrices-réceptrices et un contrôleur de ces stations (handover interne), les échanges d'information entre le mobile et les stations étant de type à accès multiple à répartition dans le temps, le mobile comprenant des moyens de détection d'une instruction lui indiquant, lorsqu'il passe d'une première cellule, correspondant à la couverture géographique d'une première des stations avec laquelle le mobile est en communication, à une deuxième cellule, correspondant à la couverture géographique d'une deuxième des stations, qu'il doit émettre à l'attention de la deuxième station une séquence de signaux de synchronisation, la deuxième station comportant des moyens de calcul d'une information d'avance temporelle à fournir au mobile,
ce système étant caractérisé en ce que le mobile continue à communiquer avec la première station immédiatement après avoir émis la séquence de signaux de synchronisation à l'attention de la deuxième station,
en ce que la deuxième station comporte des moyens d'émission de l'information d'avance temporelle calculée à l'attention du contrôleur,
en ce que le contrôleur comporte des moyens d'émission de l'information d'avance temporelle calculée à l'attention de la première station
et en ce que la première station comporte des moyens de retransmission de l'information d'avance temporelle calculée à l'attention du mobile.

En cas de handover externe selon l'invention, le système d'échange d'informations dans un réseau de radiotéléphonie cellulaire entre un mobile, une première station rattachée à un premier contrôleur et une deuxième station rattachée à un deuxième contrôleur, les contrôleurs étant pilotés par un même commutateur, les échanges d'information entre le mobile et les stations étant de type à accès multiple à répartition dans le temps, le mobile comprenant des moyens de détection d'une instruction lui indiquant, lorsqu'il passe d'une première cellule, correspondant à la couverture géographique de la première station avec laquelle le mobile est en communication, à une deuxième cellule, correspondant à la couverture géographique de la deuxième station, qu'il doit émettre à l'attention de la deuxième station une séquence de signaux de synchronisation, la deuxième station comportant des moyens de calcul d'une information d'avance temporelle à fournir au mobile,
le système est caractérisé en ce que le mobile continue à communiquer avec la première station immédiatement après avoir émis la séquence de signaux de synchronisation à l'attention de la deuxième station,
en ce que la deuxième station comporte des moyens d'émission de l'information d'avance temporelle calculée à l'attention du commutateur par l'intermédiaire du deuxième contrôleur, en ce que le commutateur comporte des moyens d'émission de l'information d'avance temporelle calculée à l'attention du premier contrôleur,
en ce que le premier contrôleur comporte des moyens d'émission de l'information d'avance temporelle calculée à l'attention de la première station,
et en ce que la première station comporte des moyens de retransmission de l'information d'avance temporelle calculée à l'attention du mobile.

D'autres caractéristiques et avantages de l'invention apparaîtront à la lecture de la description suivante d'un mode de réalisation préférentiel, donné à titre illustratif et non limitatif, et des dessins annexés dans lesquels:
- la figure 1 représente la structure d'un réseau de type GSM;
- la figure 2 est un chronogramme corrélatif de signaux échangés entre une station et un mobile;
- la figure 3 représente une procédure de handover interne demandé par un mobile qui désire se connecter sur la station d'une cellule;
- la figure 4 représente une procédure de handover interne selon l'invention;
- la figure 5 représente une procédure de handover externe selon l'invention;
- la figure 6 représente une structure simplifiée d'un mobile MS adapté pour mettre en oeuvre le procédé de la présente invention;
- la figure 7 représente une structure simplifiée d'une station émettrice-réceptrice BTS;
- la figure 8 représente une structure simplifiée d'un contrôleur BSC de stations émettrices-réceptrices adapté pour mettre en oeuvre le procédé de la présente invention;
- la figure 9 représente une structure simplifiée d'un commutateur MSC adapté pour mettre en oeuvre le procédé de la présente invention.

Les figures 1 à 3 ont été décrites précédemment en référence à l'état de la technique.

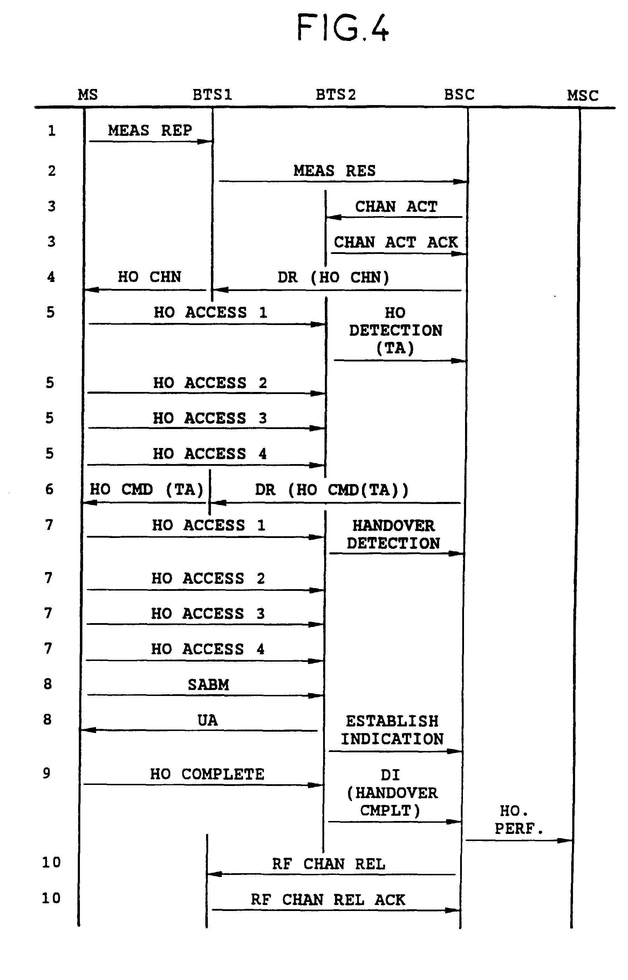

La figure 4 représente une procédure de handover interne selon l'invention, c'est à dire que la station avec laquelle communique le mobile et celle avec laquelle ce mobile désire établir une communication appartiennent au même système BSS.

Les étapes 1 à 3 précédemment décrites en référence à la figure 3 sont identiques dans le cadre de l'invention, c'est à dire que le contrôleur BSC considère qu'il est nécessaire d'effectuer une procédure de handover car le mobile MS pourrait mieux communiquer avec la station BTS2 qu'avec la station BTS1 avec laquelle il communique actuellement. Le contrôleur BSC active un canal de la station BTS2 et cette station BTS2 acquitte l'allocation, le contrôleur BSC en ayant fixé les caractéristiques.

La présente invention se distingue de l'état de la technique en ce que, à l'étape 4, le contrôleur BSC envoie une instruction, appelée Handover Channel (HO CHN), indiquant d'une part au mobile MS qu'il doit interrompre sa communication avec la première station BTS1 pour envoyer à la deuxième station BTS2 une (première) séquence de signaux HO ACCESS (étape 5) de synchronisation permettant à la deuxième station BTS2 de mesurer le temps de transit des signaux de synchronisation, ce temps de transit correspondant à la moitié de la valeur de l'information d'avance temporelle TA, et d'autre part que le mobile MS doit continuer à communiquer avec la première station BTS1 immédiatement après avoir envoyé cette première séquence de signaux HO ACCESS de synchronisation. Ce nouveau message HO CHN se distingue donc du signal HANDOVER CMD de l'état de la technique en ce que le mobile MS continue de communiquer avec la première station BTS1 après l'envoi des messages de synchronisation HO ACCESS, et la communication avec BTS1 n'a donc été coupée que pendant environ 25 à 30 ms (envoi de quatre messages successifs). Bien entendu, le nombre de messages de synchronisation successifs n'est pas nécessairement de quatre et peut être réduit. L'instruction HO CHN est retransmise de façon transparente par la station BTS1 au mobile MS.

Lorsque la station BTS2 reçoit un de ces messages de synchronisation, elle calcule la valeur de l'information d'avance temporelle TA et la fournit au contrôleur BSC dans un message HO DETECTION (TA) de détection de synchronisation. Le contrôleur BSC envoie alors au mobile, par l'intermédiaire de la station BTS1, un signal de commande HO CMD (TA) (étape 6) comprenant l'information d'avance temporelle TA.

Le mobile MS connaît alors l'avance temporelle qu'il doit utiliser pour dialoguer avec la station BTS2.

A la réception de TA, le mobile peut émettre une seconde séquence de signaux de synchronisation HO ACCESS (étape 7). Le fonctionnement est alors identique à celui mis en oeuvre dans un réseau de radiotéléphonie cellulaire de type synchrone, ce qui a pour avantage de permettre au mobile d'utiliser une procédure connue et donc de ne pas compliquer la mise en oeuvre de l'invention au sein du mobile.

Les étapes 8 à 10 sont identiques aux étapes 6 à 8 de la figure 3, c'est à dire que la procédure se termine en informant le commutateur MSC de la réussite de la procédure de handover. Le mobile MS est alors en communication avec la station BTS2.

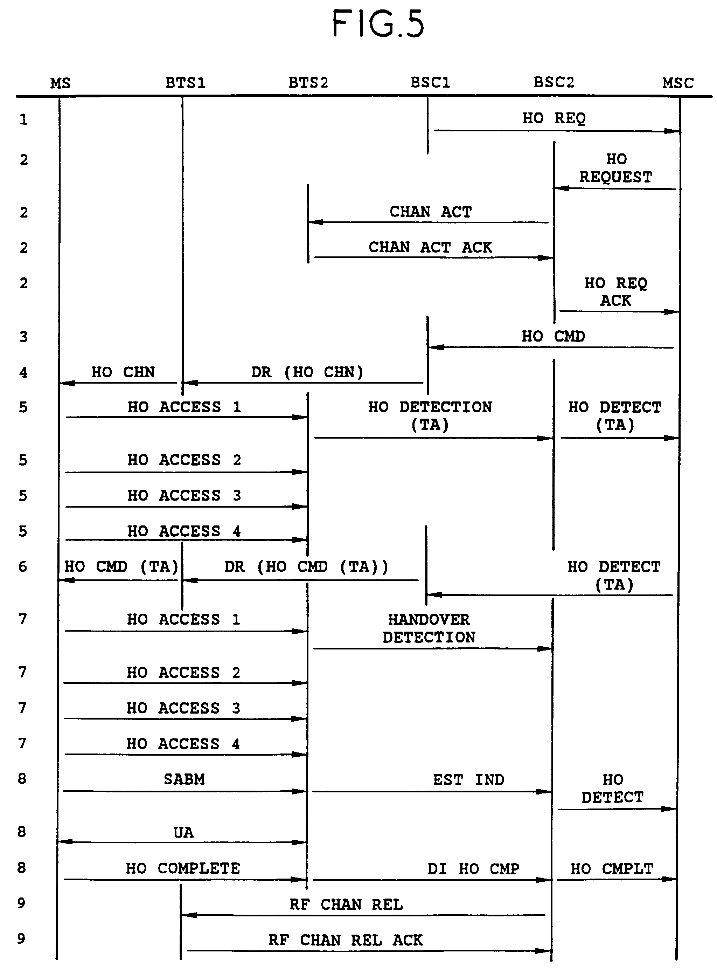

Bien entendu, la présente invention s'applique également aux procédures de handover externe, c'est à dire que les stations BTS1 et BTS2 peuvent appartenir à des systèmes BSS différents. Une telle procédure est représentée à la figure 5 et la configuration envisagée est que le mobile MS est en communication avec la station BTS1 pilotée par le contrôleur BSC1, et doit se connecter à la station BTS2 pilotée par le contrôleur BSC2.

A l'étape 1, le contrôleur BSC1 transmet au commutateur MSC un message HO REQ indiquant que le mobile MS désire entrer en communication avec la station BTS2. A l'étape 2, le MSC transmet cette demande à BSC2 (message HO REQUEST) qui interroge la station BTS2 (message CHAN ACT) pour activer un de ses canaux. BTS2 acquitte l'allocation par un message CHAN ACT ACK et BSC2 transmet un message HO REQ ACK au commutateur MSC. A l'étape 3, le commutateur génère un message de handover (message HO CMD) destiné à BSC1, indiquant que ce nouveau type de handover doit être utilisé. A l'étape 4, BSC1 envoie une instruction HO CHN au mobile MS lui indiquant quel canal de fréquence il doit utiliser pour entrer en contact avec BTS2. Le mobile MS interrompt sa communication en cours et génère quatre HO ACCESS successifs (étape 5) et reprend immédiatement sa transmission de données de type phonie. La station BTS2 détecte ici le premier message HO ACCESS 1 et calcule l'avance temporelle TA avant de la retransmettre à BSC2 (message HO DETECTION (TA)). Le contrôleur BSC2 transmet cette information à MSC (message HO DETECT (TA)). A l'étape 6, le commutateur MSC renvoie cet ordre à BSC1 qui génère un ordre de commande de handover (message HO CMD (TA)) à l'attention du mobile MS, par l'intermédiaire de la station BTS1. A la fin de l'étape 6, le mobile a donc connaissance de l'information d'avance temporelle TA à utiliser pour communiquer avec la station BTS2.

De même que dans le cas d'un handover interne, pour effectuer une procédure de handover conforme à celle d'un réseau de radiotéléphonie cellulaire synchrone, le mobile MS peut alors émettre quatre HO ACCESS successifs vers BTS2 qui génère un message HANDOVER DETECTION à l'attention de BSC2. La suite de la procédure est identique à celle de la figure 4, à l'exception de l'émission d'un message d'information HO DETECT de BSC2 vers le commutateur MSC.

La procédure de handover selon l'invention permet de limiter la coupure de communication entre un mobile et sa station émettrice-réceptrice à environ 60 à 80 ms, et le mobile n'attend pas d'avoir reçu l'information d'avance temporelle TA de la station BTS2. Cette brève coupure de communication peut facilement être masquée par un logiciel d'extrapolation de parole.

L'invention s'applique notamment aux réseaux de radiotéléphonie cellulaires de type GSM, et en particulier à de tels réseaux où les stations sont asynchrones entre elles et où le déphasage entre les horloges de ces stations n'est pas connu. De manière générale, l'invention s'applique à tous les réseaux de radiotéléphonie cellulaire où une information d'avance temporelle doit être fournie à un mobile lorsqu'il change de cellule.

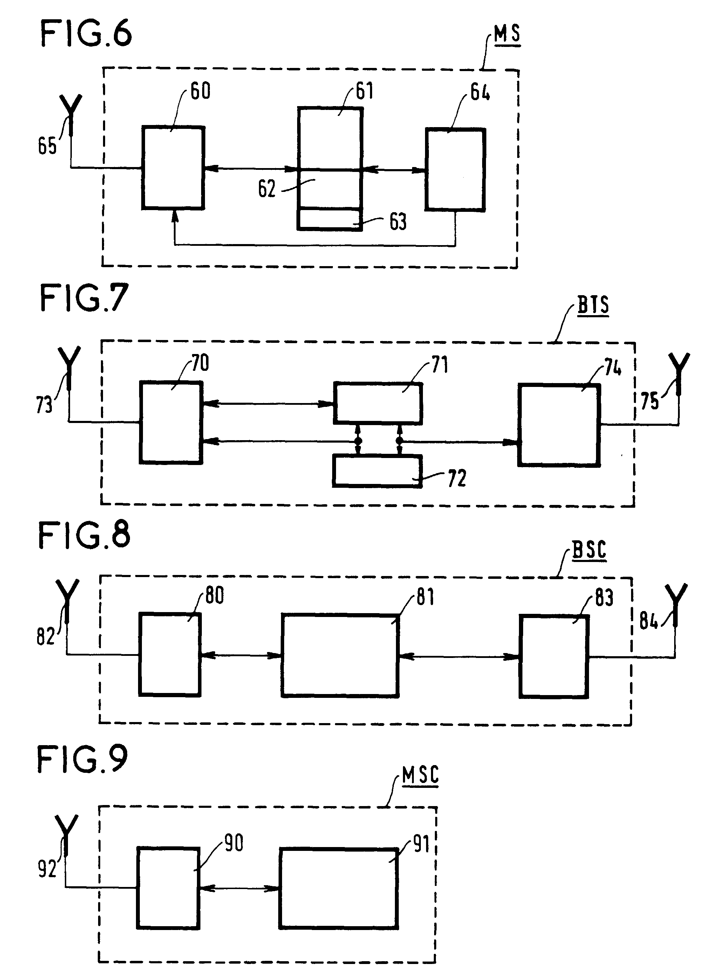

La figure 6 représente une structure simplifiée d'un mobile MS adapté pour mettre en oeuvre le procédé de la présente invention.

Le mobile MS, par exemple constitué par un radiotéléphone, comporte de façon connue une antenne d'émission-réception 65 raccordée à des moyens d'émission et de réception 60 de signaux. Les moyens 60 comportent notamment un modulateur, un démodulateur et des étages d'amplification et de commande de gain. Ils sont raccordés à des moyens de gestion 64 qui assurent le fonctionnement du mobile MS. Selon l'invention, le mobile MS comporte de plus des moyens 61 de détection de l'instruction HO CHN qui lui est transmise par la station avec laquelle il communique (station BTS1 dans les exemples précédents). A la détection de cette instruction, le mobile MS émet la première séquence de signaux HO ACCESS à l'attention de la station avec laquelle il va devoir communiquer (station BTS2). Le mobile MS comporte également des moyens 62 de détection du signal de commande HO CMD (TA) qui assurent notamment l'extraction de l'information d'avance temporelle TA. Cette information TA est transmise aux moyens de gestion 64 qui avancent l'émission des signaux destinés à la station BTS2.

Optionnellement, le mobile MS peut comporter des moyens 63 de décision d'émission d'une seconde séquence de signaux de synchronisation (étapes 7 sur les figures 4 et 5) à l'attention de la station BTS2, lorsque le signal de commande HO CMD (TA) est détecté.

La figure 7 représente une structure simplifiée d'une station émettrice-réceptrice BTS.

La station BTS représentée est par exemple la station BTS2, et communique avec le mobile MS à l'aide d'une antenne 73 raccordée à des moyens d'émission et de réception 70 de signaux. Chaque station BTS comporte des moyens de calcul 71 de l'information d'avance temporelle TA à communiquer au mobile. A la réception d'un des signaux HO ACCESS émis par le mobile, les moyens de calcul 71 (raccordés à une base de temps non représentée) mesurent le temps séparant l'émission d'un top d'horloge et la réception d'un HO ACCESS puisque ce temps correspond à un trajet aller et retour des signaux entre la station et le mobile MS. Une fois la valeur de TA calculée, des moyens de gestion 72 commandent l'émission du message HO DETECTION (TA) à l'attention du contrôleur auquel cette station BTS est rattachée. Cette émission peut être effectuée à l'aide d'une antenne 75 raccordée à des moyens d'émission-réception 74 (transmission hertzienne) ou alors à l'aide d'une liaison physique (câble, fibre optique, ...).

Les moyens d'émission-réception 70 et 74 peuvent être considérés comme des moyens de retransmission de signaux lorsqu'ils ne font que servir de relais de transmission.

La figure 8 représente une structure simplifiée d'un contrôleur BSC de stations émettrices-réceptrices adapté pour mettre en oeuvre le procédé de la présente invention.

Le contrôleur BSC représenté comporte des moyens d'émission-réception 80 raccordés à une antenne 82 (ou à une liaison physique apte à communiquer avec une station BTS telle que représentée à la figure 7), des moyens de gestion 81 et des moyens d'émission-réception 83 raccordés à une antenne 84 (ou à une liaison physique apte à communiquer avec un commutateur MSC tel que représenté à la figure 9).

Les moyens 80 assurent d'une part la réception de l'information d'avance temporelle TA qui est transmise dans le message HO DETECTION (TA) émis par la station avec laquelle le mobile MS doit communiquer (station BTS2) et d'autre part la transmission du signal de commande HO CMD (TA) à l'attention de la station avec laquelle le mobile communique (station BTS1).

Les moyens 83 assurent les communications avec le commutateur pilotant ce contrôleur BSC et notamment, dans le cas d'un handover externe, la transmission des signaux HO DETECT (TA).

La figure 9 représente une structure simplifiée d'un commutateur MSC adapté pour mettre en oeuvre le procédé de la présente invention. Ce commutateur MSC est utilisé dans le cas d'un handover externe puisque l'information d'avance temporelle calculée par la station cible (station BTS2) est transmise au mobile par l'intermédiaire du commutateur MSC permettant de relier les contrôleurs de deux stations de BSS différentes.

Le commutateur MSC comporte une antenne 92 d'émission-réception raccordée à des moyens 90 d'émission et de réception de signaux pilotés par des moyens de gestion 91. Les moyens de réception servent pour recevoir le message HO DETECT (TA) du contrôleur de la station (BTS2) avec laquelle le mobile MS doit communiquer et les moyens d'émission pour la transmission de ce même message au contrôleur de la station (BTS1) avec laquelle le mobile MS est en cours de communication. Comme précédemment indiqué, les moyens d'émission-réception 90 et l'antenne 92 peuvent être adaptés pour une communication par liaison physique avec les contrôleurs des stations BTS1 et BTS2.

Les modifications à apporter aux réseaux de radiotéléphonie cellulaire existants pour l'implantation de ce nouveau procédé sont mineures et peuvent être réalisées en modifiant les logiciels de commande de fonctionnement des différents éléments constitutifs (mobile, station, contrôleur et commutateur).

L'invention s'applique préférentiellement à un réseau de radiotéléphonie cellulaire de type GSM et trouve un intérêt tout particulier lorsque les stations qui composent ce réseau sont asynchrones entre elles.

## Revendications

1. Procédé d'échange d'informations dans un réseau de radiotéléphonie cellulaire entre notamment un mobile (MS), au moins deux stations émettrices-réceptrices (BTS1, BTS2) et un contrôleur (BSC) desdites stations (BTS1, BTS2), lesdits échanges d'information entre ledit mobile (MS) et lesdites stations (BTS1, BTS2) étant de type à accès multiple à répartition dans le temps, ledit procédé consistant à :
- transmettre dudit contrôleur (BSC) audit mobile (MS), par l'intermédiaire d'une des stations (BTS1), appelée première station, avec laquelle ledit mobile communique, une instruction (HO CHN) lui indiquant qu'il doit interrompre sa communication avec ladite première station (BTS1) pour envoyer à une deuxième station (BTS2) une première séquence de signaux (HO ACCESS) de synchronisation permettant à ladite deuxième station (BTS2) de calculer une information d'avance temporelle (TA), ladite transmission de ladite instruction (HO CHN) étant effectuée lorsque ledit mobile (MS) passe d'une première cellule (C1), correspondant à la couverture géographique de ladite première station (BTS1), à une deuxième cellule (C2), correspondant à la couverture géographique de ladite deuxième station (BTS2) ;
- fournir audit mobile (MS) ladite information d'avance temporelle calculée (TA),
ledit procédé étant caractérisé en ce que :
- ladite instruction (HO CHN) fournie audit mobile (MS) est également indicative que ledit mobile (MS) doit continuer à communiquer avec ladite première station (BTS1) immédiatement après avoir envoyé à ladite deuxième station (BTS2) ladite première séquence de signaux (HO ACCESS) de synchronisation ;
et en ce qu'il consiste également à :
- transmettre de ladite deuxième station (BTS2) audit contrôleur (BSC) ladite information d'avance temporelle calculée (TA) ;
- transmettre dudit contrôleur (BSC) audit mobile (MS), par l'intermédiaire de ladite première station (BTS1), ladite information d'avance temporelle calculée (TA).

2. Procédé selon la revendication 1, caractérisé en ce qu'il consiste à transmettre dudit mobile (MS) à ladite deuxième station (BTS2) une seconde séquence de signaux (HO ACCESS) de synchronisation après avoir reçu ladite information d'avance temporelle calculée (TA).

3. Procédé d'échange d'informations dans un réseau de radiotéléphonie cellulaire entre notamment un mobile (MS), au moins une première et une deuxième stations émettrices-réceptrices (BTS1, BTS2), un premier et un deuxième contrôleurs (BSC1, BSC2) pilotant respectivement ladite première (BTS1) et deuxième (BTS2) stations, et un commutateur (MSC) pilotant lesdits premier et deuxième contrôleurs (BSC1, BSC2), lesdits échanges d'information entre ledit mobile (MS) et lesdites première et deuxième stations (BTS1, BTS2) étant de type à accès multiple à répartition dans le temps, ledit procédé consistant à :
- transmettre dudit premier contrôleur (BSC1) audit mobile (MS) une instruction (HO CHN) lui indiquant qu'il doit interrompre sa communication avec ladite première station (BTS1) avec laquelle il est en communication pour envoyer à ladite deuxième station (BTS2) une première séquence de signaux (HO ACCESS) de synchronisation permettant à ladite deuxième station (BTS2) de calculer une information d'avance temporelle (TA), ladite transmission de ladite instruction (HO CHN) étant effectuée lorsque ledit mobile (MS) passe d'une première cellule (C1), correspondant à la couverture géographique de ladite première station (BTS1), à une deuxième cellule (C2), correspondant à la couverture géographique de ladite deuxième station (BTS2) ;
- fournir audit mobile (MS) ladite information d'avance temporelle calculée (TA),
ledit procédé étant caractérisé en ce que :
- ladite instruction (HO CHN) fournie audit mobile (MS) est également indicative que ledit mobile (MS) doit continuer à communiquer avec ladite première station (BTS1) immédiatement après avoir envoyé à ladite deuxième station (BTS2) ladite première séquence de signaux (HO ACCESS) de synchronisation,
et en ce qu'il consiste également à :
- transmettre de ladite deuxième station (BTS2) audit deuxième contrôleur (BSC2) ladite information d'avance temporelle calculée (TA) ;
- transmettre dudit deuxième contrôleur (BSC2) audit commutateur (MSC) ladite information d'avance temporelle calculée (TA) ;
- transmettre dudit commutateur (MSC) audit premier contrôleur (BSC1) ladite information d'avance temporelle calculée (TA) ;
- transmettre dudit premier contrôleur (BSC1) audit mobile (MS), par l'intermédiaire de ladite première station (BTS1), ladite information d'avance temporelle calculée (TA).

4. Procédé selon la revendication 3, caractérisé en ce que ledit mobile (MS) envoie à ladite deuxième station (BTS2) une seconde séquence de signaux (HO ACCESS) de synchronisation après avoir reçu ladite information d'avance temporelle calculée (TA).

5. Procédé selon l'une des revendications 1 et 3 mis en oeuvre dans un réseau de radiotéléphonie cellulaire de type GSM, caractérisé en ce qu'il consiste à transmettre ladite information d'avance temporelle calculée (TA) de ladite deuxième station (BTS2) audit contrôleur (BSC, BSC2) auquel ladite deuxième station est rattachée dans une information (HO DETECTION) de détection de synchronisation.

6. Procédé selon l'une des revendications 3 à 5 mis en oeuvre dans un réseau de radiotéléphonie cellulaire de type GSM, caractérisé en ce qu'il consiste à transmettre ladite information d'avance temporelle calculée (TA) dudit deuxième contrôleur (BSC2) audit commutateur (MSC) dans une information (HO DETECTION) de détection de synchronisation.

7. Procédé selon l'une des revendications 3 à 6 mis en oeuvre dans un réseau de radiotéléphonie cellulaire de type GSM, caractérisé en ce qu'il consiste à transmettre ladite information d'avance temporelle calculée (TA) dudit commutateur (MSC) audit premier contrôleur (BSC1) dans une information (HO DETECTION) de détection de synchronisation.

8. Procédé selon l'une des revendications 1 à 7 mis en oeuvre dans un réseau de radiotéléphonie cellulaire de type GSM, caractérisé en ce qu'il consiste à transmettre dudit contrôleur (BSC, BSC1) auquel ladite première station (BTS1) est rattachée audit mobile (MS), par l'intermédiaire de ladite première station (BTS1), ladite information d'avance temporelle calculée (TA) dans un signal de commande (HO CMD (TA)).

9. Procédé selon l'une des revendications 1 à 8, caractérisé en ce que lesdites stations (BTS1, BTS2) sont asynchrones entre elles, le déphasage entre leurs signaux d'horloge étant inconnu.

10. Mobile (MS) destiné à communiquer par accès multiple à répartition dans le temps avec des stations émettrices-réceptrices (BTS) d'un réseau de radiotéléphonie cellulaire, ledit mobile (MS) comprenant des moyens (60, 65) d'émission et de réception de signaux et recevant une information d'avance temporelle (TA) lorsqu'il passe d'une première cellule (C1), correspondant à la couverture géographique d'une première (BTS1) desdites stations avec laquelle ledit mobile (MS) est en communication, à une deuxième cellule (C2), correspondant à la couverture géographique d'une deuxième (BTS2) desdites stations, caractérisé en ce qu'il comporte en outre :
- des moyens (61) de détection d'une instruction (HO CHN) qui lui est transmise par ladite première station (BTS1) et qui lui indique d'une part qu'il doit interrompre sa communication avec ladite première station (BTS1) pour émettre une première séquence de signaux (HO ACCESS) de synchronisation à l'attention de ladite deuxième station (BTS2) et d'autre part qu'il doit continuer à communiquer avec ladite première station (BTS1) immédiatement après avoir envoyé ladite première séquence de signaux (HO ACCESS) de synchronisation à ladite deuxième station (BTS2) ;
- des moyens (62) de détection d'un signal de commande (HO CMD (TA)) qui lui est transmis par ladite première station (BTS1), ledit signal de commande (HO CMD (TA)) comprenant ladite information d'avance temporelle (TA).

11. Mobile selon la revendication 10, caractérisé en ce qu'il comprend également des moyens (63) de décision d'émission d'une seconde séquence de signaux (HO ACCESS) de synchronisation à l'attention de ladite deuxième station (BTS2) lorsqu'il reçoit ledit signal de commande (HO CMD (TA)) comprenant ladite information d'avance temporelle (TA).

12. Contrôleur (BSC) de stations émettrices-réceptrices (BTS) d'un réseau de radiotéléphonie cellulaire par accès multiple à répartition dans le temps où évolue au moins un mobile (MS), caractérisé en ce que ledit contrôleur (BSC) comporte :
- des moyens (80) de réception d'une information d'avance temporelle (TA) qui lui est transmise dans un message (HO DETECTION (TA)) émis par une station, appelée deuxième station (BTS2), avec laquelle ledit mobile (MS) veut communiquer, suite à l'émission d'un message de synchronisation (HO ACCESS) par ledit mobile (MS) à l'attention de ladite deuxième station (BTS2) lorsque celui-ci passe d'une première cellule (C1), correspondant à la couverture géographique d'une première (BTS1) desdites stations avec laquelle ledit mobile (MS) est en communication, à une deuxième cellule (C2), correspondant à la couverture géographique de ladite deuxième (BTS2) station;
- des moyens d'émission (80) d'un signal de commande (HO CMD (TA)) à l'attention de ladite première station (BTS1), ledit signal de commande comprenant ladite information d'avance temporelle (TA) destinée audit mobile (MS).

13. Contrôleur selon la revendication 12, caractérisé en ce qu'il comporte également des moyens (83, 84) d'émission d'une information (HO DETECT (TA)) comprenant ladite information d'avance temporelle calculée (TA) à l'attention d'un commutateur (MSC), ladite information transmise audit commutateur (MSC) étant transmise à la réception dudit message (HO DETECTION (TA)) émis par ladite deuxième station (BTS2).

14. Système d'échange d'informations entre un mobile (MS), au moins deux stations émettrices-réceptrices (BTS1, BTS2) et un contrôleur (BSC) desdites stations (BTS1, BTS2), lesdits échanges d'information entre ledit mobile (MS) et lesdites stations (BTS1, BTS2) étant de type à accès multiple à répartition dans le temps, ledit mobile (MS) comprenant des moyens de détection (61) d'une instruction (HO CHN) lui indiquant, lorsqu'il passe d'une première cellule (C1), correspondant à la couverture géographique d'une première (BTS1) desdites stations avec laquelle ledit mobile (MS) est en communication, à une deuxième cellule (C2), correspondant à la couverture géographique d'une deuxième (BTS2) desdites stations, qu'il doit émettre à l'attention de ladite deuxième station (BTS2) une séquence de signaux de synchronisation (HO ACCESS), ladite deuxième station (BTS2) comportant des moyens (71) de calcul d'une information d'avance temporelle (TA) à fournir audit mobile (MS),
caractérisé en ce que ledit mobile (MS) est adapté à continuer à communiquer avec ladite première station (BTS1) immédiatement après avoir émis ladite séquence de signaux de synchronisation (HO ACCESS) à l'attention de ladite deuxième station (BTS2),
en ce que ladite deuxième station (BTS2) comporte des moyens (70) d'émission de ladite information d'avance temporelle calculée (TA) à l'attention dudit contrôleur (BSC),
en ce que ledit contrôleur (BSC) comporte des moyens (80) d'émission de ladite information d'avance temporelle calculée (TA) à l'attention de ladite première station (BTS1)
et en ce que ladite première station (BTS1) comporte des moyens (70) de retransmission de ladite information d'avance temporelle calculée (TA) à l'attention dudit mobile (MS).

15. Système d'échange d'informations dans un réseau de radiotéléphonie cellulaire entre un mobile (MS), une première station (BTS1) rattachée à un premier contrôleur (BSC1) et une deuxième station (BTS2) rattachée à un deuxième contrôleur (BSC2), lesdits contrôleurs (BSC1, BSC2) étant pilotés par un même commutateur (MSC), lesdits échanges d'information entre ledit mobile (MS) et lesdites stations (BTS1, BTS2) étant de type à accès multiple à répartition dans le temps, ledit mobile (MS) comprenant des moyens de détection (61) d'une instruction (HO CHN) lui indiquant, lorsqu'il passe d'une première cellule (C1), correspondant à la couverture géographique de ladite première station (BTS1) avec laquelle ledit mobile (MS) est en communication, à une deuxième cellule (C2), correspondant à la couverture géographique de ladite deuxième station (BTS2), qu'il doit émettre à l'attention de ladite deuxième station (BTS2) une séquence de signaux de synchronisation (HO ACCESS), ladite deuxième station (BTS2) comportant des moyens de calcul d'une information d'avance temporelle (TA) à fournir audit mobile (MS),
caractérisé en ce que ledit mobile (MS) est adapté à continuer à communiquer avec ladite première station (BTS1) immédiatement après avoir émis ladite séquence de signaux de synchronisation (HO ACCESS) à l'attention de ladite deuxième station (BTS2),
en ce que ladite deuxième station (BTS2) comporte des moyens (70) d'émission de ladite information d'avance temporelle calculée (TA) à l'attention dudit commutateur (MSC) par l'intermédiaire dudit deuxième contrôleur (BSC2),
en ce que ledit commutateur (MSC) comporte des moyens (90) d'émission de ladite information d'avance temporelle calculée (TA) à l'attention dudit premier contrôleur (BSC1),
en ce que ledit premier contrôleur (BSC1) comporte des moyens (80) d'émission de ladite information d'avance temporelle calculée (TA) à l'attention de ladite première station (BTS1),
et en ce que ladite première station (BTS1) comporte des moyens (70) de retransmission de ladite information d'avance temporelle calculée (TA) à l'attention dudit mobile (MS).

## Patentansprüche

1. Verfahren zum Austausch von Informationen in einem zellulären Funktelefonnetz zwischen insbesondere einem mobilen Gerät (MS), wenigstens zwei Sende-Empfangsstationen (BTS1, BTS2) und einem Controller (BSC) der Stationen (BTS1, BTS2), wobei die Informationsaustäusche zwischen dem mobilen Gerät (MS) und den Stationen (BTS1, BTS2) vom Typ mit Vielfachzugriff im Zeitmultiplex sind, wobei das Verfahren darin besteht,
- vom Controller (BSC) an das mobile Gerät (MS) über eine der Stationen (BTS1), die erste Station genannt wird, mit welcher das mobile Gerät kommuniziert, eine Anweisung (HO CHN) zu übertragen, die ihm anzeigt, daß es seine Kommunikation mit der ersten Station (BTS1) unterbrechen soll, um an eine zweite Station (BTS2) eine erste Folge von Synchronisationssignalen (HO ACCESS) zu schicken, die es der zweiten Station (BTS2) erlauben, eine Zeitvorsprungsinformation (TA) zu berechnen, wobei die Übertragung dieser Anweisung (HO CHN) ausgeführt wird, wenn das mobile Gerät (MS) von einer der geographischen Abdeckung der ersten Station (BTS1) entsprechenden ersten Zelle (C1) in eine der geographischen Abdeckung der zweiten Station (BTS2) entsprechende zweite Zelle (C2)übergeht;
- dem mobilen Gerät (MS) die berechnete Zeitvorsprungsinformation (TA) zu liefern,
dadurch gekennzeichnet daß:
- die dem mobilen Gerät (MS) gelieferte Anweisung (HO CHN) ferner ein Hinweis darauf ist, daß das mobile Gerät (MS), unmittelbar nachdem es an die zweite Station (BTS2) die erste Folge von Synchronisationssignalen (HO ACCESS) geschickt hat, weiter mit der ersten Station (BTS1) kommunizieren soll;
und daß es ferner darin besteht,
- die berechnete Zeitvorsprungsinformation (TA) von der zweiten Station (BTS2) an den Controller (BSC) zu übertragen;
- die berechnete Zeitvorsprungsinformation (TA) vom Controller (BSC) über die erste Station (BTS1) an das mobile Gerät (MS) zu übertragen.

2. Verfahren nach Anspruch 1, dadurch gekennzeichnet, daß es darin besteht, vom mobilen Gerät (MS) an die zweite Station (BTS2) eine zweite Folge von Sychronisationssignalen (HO ACCESS) zu übertragen, nachdem es die berechnete Zeitvorsprungsinformation (TA) empfangen hat.

3. Verfahren zum Austausch von Informationen in einem zellulären Funktelefonnetz zwischen insbesondere einem mobilen Gerät (MS), wenigstens einer ersten und einer zweiten Sende-Empfangsstation (BTS1, BTS2), einem ersten und einem zweiten Controller (BSC1, BSC2), die jeweils die erste (BTS1) bzw. zweite Station (BTS2) lenken, und einem Umschalter (MSC), der den ersten und den zweiten Controller (BSC1, BSC2) lenkt, wobei die Informationsaustäusche zwischen dem mobilen Gerät (MS) und der ersten und der zweiten Station (BTS1, BTS2) vom Typ mit Vielfachzugriff im Zeitmultiplex sind, wobei das Verfahren darin besteht,
- eine Anweisung (HO CHN) vom ersten Controller (BSC1) an das mobile Gerät (MS) zu übertragen, die ihm anzeigt, daß es seine Kommunikation mit der ersten Station (BTS1), mit der es in Kommunikation steht, unterbrechen soll, um an die zweite Station (BTS2) eine erste Folge von Synchronisationssignalen (HO ACCESS) zu schicken, die es der zweiten Station (BTS2) erlauben, eine Zeitvorsprungsinformation (TA) zu berechnen, wobei die Übertragung der Anweisung (HO CHN) ausgeführt wird, wenn das mobile Gerät (MS) von einer der geographischen Abdeckung der ersten Station (BTS1) entsprechenden ersten Zelle (C1) in eine der geographischen Abdeckung der zweiten Station (BTS2) entsprechende zweite Zelle (C2) übergeht;
- die berechnete Zeitvorsprungsinformation (TA) an das mobile Gerät (MS) zu liefern,
wobei das Verfahren dadurch gekennzeichnet ist, daß
- die an das mobile Gerät (MS) gelieferte Anweisung (HO CHN) ferner anzeigt, daß das mobile Gerät (MS), unmittelbar nachdem es an die zweite Station (BTS2) die erste Folge von Synchronisationssignalen (HO ACCESS) geschickt hat, weiter mit der ersten Station (BTS1) kommunizieren soll,
und daß das Verfahren ferner darin besteht,
- die berechnete Zeitvorsprungsinformation (TA) von der zweiten Station (BTS2) an den zweiten Controller (BSC2) zu übertragen;
- die berechnete Zeitvorsprungsinformation (TA) vom zweiten Controller (BSC2) an den Umschalter (MSC) zu übertragen;
- die berechnete Zeitvorsprungsinformation (TA) vom Umschalter (MSC) an den ersten Controller (BSC1) zu übertragen;
- die berechnete Zeitvorsprungsinformation (TA) vom ersten Controller (BSC1) an das mobile Gerät (MS) über die erste Station (BTS1) zu übertragen.

4. Verfahren nach Anspruch 3, dadurch gekennzeichnet, daß das mobile Gerät (MS) an die zweite Station (BTS2) eine zweite Folge von Synchronisationssignalen (HO ACCESS) schickt, nachdem es die berechnete Zeitvorsprungsinformation (TA) empfangen hat.

5. Verfahren nach einem der Ansprüche 1 und 3, angewendet in einem zellulären Funktelefonnetz vom Typ GSM, dadurch gekennzeichnet, daß es darin besteht, die berechnete Zeitvorsprungsinformation (TA) von der zweiten Station (BTS2) an den Controller (BSC, BSC2), an den die zweite Station angebunden ist, in einer Synchronisations-Erfassungsinformation (HO DETECTION) zu übertragen.

6. Verfahren nach einem der Ansprüche 3 bis 5, angewendet in einem zellulären Funktelefonnetz vom Typ GSM, dadurch gekennzeichnet, daß es darin besteht, die berechnete Zeitvorsprungsinformation (TA) vom zweiten Controller (BSC2) an den Umschalter (MSC) in einer Sychronisations-Erfassungsinformation (HO DETECTION) zu übertragen.

7. Verfahren nach einem der Ansprüche 3 bis 6, angewendet in einem zellulären Funktelefonnetz vom Typ GSM, dadurch gekennzeichnet, daß es darin besteht, die berechnete Zeitvorsprungsinformation (TA) vom Umschalter (MSC) an den ersten Controller (BSC1) in einer Synchronisations-Erfassungsinformation (HO DETECTION) zu übertragen.

8. Verfahren nach einem der Ansprüche 1 bis 7, angewendet in einem zellulären Funktelefonnetz vom Typ GSM, dadurch gekennzeichnet, daß es darin besteht, die berechnete Zeitvorsprungsinformation (TA) vom Controller (BSC, BSC1), an den die erste Station (BTS1) angebunden ist, an das mobile Gerät (MS) über die erste Station (BTS1) in einem Steuersignal (HO CMD (TA)) zu übertragen.

9. Verfahren nach einem der Ansprüche 1 bis 8, dadurch gekennzeichnet, daß die Stationen (BTS1, BTS2) untereinander asynchron sind, wobei die Phasenverschiebung zwischen ihren Taktsignalen unbekannt ist.

10. Mobiles Gerät (MS), vorgesehen zum Kommunizieren durch Vielfachzugriff im Zeitmultiplex mit Sende-Empfangsstationen (BTS) eines zellulären Funktelefonnetzes, wobei das mobile Gerät (MS) Mittel (60, 65) zum Senden und Empfangen von Signalen umfaßt und eine Zeitvorsprungsinformation (TA) empfängt, wenn es von einer ersten Zelle (C1), die der geographischen Abdeckung einer ersten (BTS1) der Stationen entspricht, mit der das mobile Gerät (MS) in Kommunikation steht, in eine zweite Zelle (C2) übergeht, die der geographischen Abdeckung einer zweiten (BTS2) dieser Stationen entspricht, dadurch gekennzeichnet, daß es ferner umfaßt:
- Mittel (61) zum Erfassen einer Anweisung (HO CHN), die ihm von der ersten Station (BTS1) übertragen wird und ihm zum einen anzeigt, daß es seine Kommunikation mit der ersten Station (BTS1) unterbrechen soll, um eine erste Folge von Synchronisationssignalen (HO ACCESS) an die zweite Station (BTS2) zu senden, und zum anderen anzeigt, daß es seine Kommunikation mit der ersten Station (BTS1) fortsetzen soll, unmittelbar nachdem es die erste Folge von Synchronisationssignalen (HO ACCESS) an die zweite Station (BTS2) geschickt hat;
- Mittel (62) zum Erfassen eines Steuersignales (HO CMD (TA)), das ihm von der ersten Station (BTS1) übertragen wird, wobei das Steuersignal (HO CMD (TA)) die Zeitvorsprungsinformation (TA) umfaßt.

11. Mobiles Gerät nach Anspruch 10, dadurch gekennzeichnet, daß es ferner Mittel (63) umfaßt zum Entscheiden über das Senden einer zweiten Folge von Synchronisationssignalen (HO ACCESS) an die zweite Station (BTS2), wenn es das die Zeitvorsprungsinformation (TA) umfassende Steuersignal (HO CMD (TA)) empfängt.

12. Controller (BSC) für Sende-Empfangsstationen eines zellulären Funktelefonnetzes durch Vielfachzugriff im Zeitmultiplex, in dem sich wenigstens ein mobiles Gerät (MS) bewegt, dadurch gekennzeichnet, daß der Controller (BSC) umfaßt:
- Mittel (80) zum Empfangen einer Zeitvorsprungsinformation (TA), die an ihn in einer Nachricht (HO DETECTION (TA)) übertragen wird, die von einer als zweite Station (BTS2) bezeichneten Station, mit der das mobile Gerät kommunizieren will, infolge des Sendens einer Synchronisationsnachricht (HO ACCESS) durch das mobile Gerät (MS) an die zweite Station (BTS2) gesendet wird, wenn dieses von einer der geographischen Abdeckung einer ersten (BTS1) der Stationen, mit der das mobile Gerät (MS) in Kommunikation steht, entsprechenden ersten Zelle (C1) in eine der geographischen Abdeckung der zweiten Station (BTS2) entsprechende zweite Zelle (C2) übergeht;
- Mittel (80) zum Senden eines Steuersignales (HO CMD (TA)) an die erste Station (BTS1), wobei das Steuersignal die für das mobile Gerät (MS) bestimmte Zeitvorsprungsinformation (TA) umfaßt.

13. Controller nach Anspruch 12, dadurch gekennzeichnet, daß er ferner Mittel (83, 84) zum Senden einer Information (HO DETECT (TA)), die die berechnete Zeitvorsprungsinformation (TA) umfaßt, an einen Umschalter (MSC) aufweist, wobei die an den Umschalter (MSC) übertragene Information bei Empfang der von der zweiten Station (BTS2) gesendeten Nachricht (HO DETECTION (TA)) übertragen wird.

14. System zum Austausch von Informationen zwischen einem mobilen Gerät (MS), wenigstens zwei Sende-Empfangsstationen (BTS1, BTS2) und einem Controller (BSC) der Stationen (BTS1, BTS2), wobei die Austäusche von Informationen zwischen dem mobilen Gerät (MS) und den Stationen (BTS1, BTS2) vom Typ mit Vielfachzugriff im Zeitmultiplex sind, wobei das mobile Gerät (MS) Mittel (61) zum Erfassen einer Anweisung (HO CHN) umfaßt, die ihm anzeigt, daß es, wenn es von einer der geographischen Abdeckung einer ersten (BTS1) der Stationen, mit der das mobile Gerät (MS) in Kommunikation steht, entsprechenden ersten Zelle (C1) in eine der geographischen Abdeckung einer zweiten (BTS2) dieser Stationen entsprechende Zelle (C2) übergeht, an die zweite Station (BTS2) eine Folge von Synchronisationssignalen (HO ACCESS) senden soll, wobei die zweite Station (BTS2) Mittel (71) zum Berechnen einer an das mobile Gerät (MS) zu liefernden Zeitvorsprungsinformation (TA) umfaßt,
dadurch gekennzeichnet, daß das mobile Gerät (MS) angepaßt ist, um unmittelbar nachdem es die Folge von Synchronisationssignalen (HO ACCESS) an die zweite Station (BTS2) gesendet hat, die Kommunikation mit der ersten Station (BTS1) fortzusetzen,
daß die zweite Station (BTS2) Mittel (70) zum Senden der berechneten Zeitvorsprungsinformation (TA) an den Controller (BSC) umfaßt, daß der Controller (BSC) Mittel (80) zum Senden der berechneten Zeitvorsprungsinformation (TA) an die erste Station (BTS1) umfaßt, und
daß die erste Station (BTS1) Mittel (70) zum Weitersenden der berechneten Zeitvorsprungsinformation (TA) an das mobile Gerät (MS) umfaßt.

15. System zum Austausch von Informationen in einem zellulären Funktelefonnetz zwischen einem mobilen Gerät (MS), einer an einen ersten Controller (BSC1) angebundenen ersten Station (BTS1) und einer an einen zweiten Controller (BSC2) angebundenen zweiten Station (BTS2), wobei die Controller (BSC1, BSC2) von ein- und demselben Umschalter (MSC) gelenkt sind, wobei die Austäusche von Informationen zwischen dem mobilen Gerät (MS) und den Stationen (BTS1, BTS2) vom Typ mit Vielfachzugriff im Zeitmultiplex sind, wobei das mobile Gerät (MS) Mittel (61) zum Erfassen einer Anweisung (HO CHN) umfaßt, die ihm anzeigt, daß es, wenn es von einer der geographischen Abdeckung der ersten Station (BTS1), mit der das mobile Gerät (MS) in Kommunikation steht, entsprechenden ersten Zelle (C1) in eine der geographischen Abdeckung der zweiten Station (BTS2) entsprechende zweite Zelle (C2) übergeht, an die zweite Station (BTS2) eine Folge von Synchronisationssignalen (HO ACCESS) senden soll, wobei die zweite Station (BTS2) Mittel zum Berechnen einer an das mobile Gerät (MS) zu liefernden Zeitvorsprungsinformation (TA) umfaßt,
dadurch gekennzeichnet, daß das mobile Gerät (MS) angepaßt ist, um unmittelbar nachdem es die Folge von Synchronisationssignalen (HO ACCESS) an die zweite Station (BTS2) gesendet hat, weiter mit der ersten Station (BTS1) zu kommunizieren,
daß die zweite Station (BTS2) Mittel (70) zum Senden der berechneten Zeitvorsprungsinformation (TA) an den Umschalter (MSC) über den zweiten Controller (BSC2) umfaßt,
daß der Umschalter (MSC) Mittel (90) zum Senden der berechneten Zeitvorsprungsinformation (TA) an den ersten Controller (BSC1) umfaßt,
daß der erste Controller (BSC1) Mittel (80) zum Senden der berechneten Zeitvorsprungsinformation (TA) an die erste Station (BTS1) umfaßt,
und daß die erste Station (BTS1) Mittel (70) zum Weitersenden der berechneten Zeitvorsprungsinformation (TA) an das mobile Gerät (MS) umfaßt.

## Claims

1. Method of exchanging information in a cellular mobile radio network between a mobile station (MS), at least two base transceiver stations (BTS1, BTS2) and a base station controller (BSC) of said stations (BTS1, BTS2), said exchanges of information between said mobile station (MS) and said stations (BTS1, BTS2) being of the time-division multiple access type, said method consisting in:
- transmitting from said controller (BSC) to said mobile station (MS) via a first station (BTS1) with which said mobile station is communicating an instruction (HO CHN) telling it to interrupt communication with said first station (BTS1) in order to send to a second station (BTS2) a first sequence of synchronisation signals (HO ACCESS) enabling said second station (BTS2) to calculate a timing advance (TA), said instruction (HO CHN) being transmitted when said mobile station (MS) moves from a first cell (C1) corresponding to the geographical coverage area of said first station (BTS1) to a second cell (C2) corresponding to the geographical coverage area of said second station (BTS2), and
- supplying said calculated timing advance (TA) to said mobile station (MS),
said method being characterised in that:
- said instruction (HO CHN) supplied to said mobile station (MS) also indicates that said mobile station (MS) must continue to communicate with said first station (BTS1) immediately after sending said first sequence of synchronisation signals (HO ACCESS) to said second station (BTS2),
and in that it further consists in:
- transmitting said calculated timing advance (TA) from said second station (BTS2) to said controller (BSC), and
- transmitting said calculated timing advance (TA) from said controller (BSC) to said mobile station (MS) via said first station (BTS1).

2. Method according to claim 1 characterised in that it consists in transmitting a second sequence of synchronisation signals (HO ACCESS) from said mobile station (MS) to said second station (BTS2) after said calculated timing advance (TA) is received.

3. Method of exchanging information in a cellular mobile radio network between a mobile station (MS), at least first and second base transceiver stations (BTS1, BTS2), first and second base station controllers (BSC1, BSC2) respectively controlling said first and second stations (BTS1, BTS2) and a mobile services switching centre (MSC) controlling said first and second base station controllers (BSC1, BSC2), said exchanges of information between said mobile station (MS) and said first and second stations (BTS1, BTS2) being of the time-division multiple access type, which method consists in:
- transmitting an instruction (HO CHN) from said first controller (BSC1) to said mobile station (MS) telling it to interrupt communication with said first station (BTS1) with which it is communicating in order to send a first sequence of synchronisation signals (HO ACCESS) to said second station (BTS2) enabling said second station (BTS2) to calculate a timing advance (TA), said instruction (HO CHN) being transmitted when said mobile station (MS) moves from a first cell (C1) corresponding to the geographical coverage area of said first station (BTS1) to a second cell (C2) corresponding to the geographical coverage area of said second station (BTS2), and
- supplying said calculated timing advance (TA) to said mobile station (MS),
said method being characterised in that:
- said instruction (HO CHN) supplied to said mobile station (MS) also indicates that said mobile station (MS) must continue to communicate with said first station (BTS1) immediately after sending said first sequence of synchronisation signals (HO ACCESS) to said second station (BTS2),
and in that it further consists in:
- transmitting said calculated timing advance (TA) from said second station (BTS2) to said second controller (BSC2),
- transmitting said calculated timing advance (TA) from said second controller (BSC2) to said switching centre (MSC),
- transmitting said calculated timing advance (TA) from said switching centre (MSC) to said first controller (BSC1), and
- transmitting said calculated timing advance (TA) from said first controller (BSC1) to said mobile station (MS) via said first station (BTS1).

4. Method according to claim 3 characterised in that said mobile station (MS) sends a second sequence of synchronisation signals (HO ACCESS) to said second station (BTS2) after said calculated timing advance (TA) is received.

5. Method according to claim 1 or claim 3 implemented in a GSM type cellular mobile radio network characterised in that it consists in transmitting said calculated timing advance (TA) from said second station (BTS2) to said controller (BSC, BSC2) with which said second station is associated in a synchronisation detected indication (HO DETECTION).

6. Method according to any one of claims 3 to 5 implemented in a GSM type cellular mobile radio network characterised in that it consists in transmitting said calculated timing advance (TA) from said second controller (BSC2) to said switching centre (MSC) in a synchronisation detected indication (HO DETECTION).

7. Method according to any one of claims 3 to 6 implemented in a GSM type cellular mobile radio network characterised in that it consists in transmitting said calculated timing advance (TA) from said switching centre (MSC) to said first controller (BSC1) in a synchronisation detected indication (HO DETECTION).

8. Method according to any one of claims 1 to 7 implemented in a GSM type cellular mobile radio network characterised in that it consists in transmitting said calculated timing advance (TA) in a control signal (HO CMD (TA)) from said controller (BSC, BSC1) with which said first station (BTS1) is associated to said mobile station (MS) via said first station (BTS1).

9. Method according to any one of claims 1 to 8 characterised in that said stations (BTS1, BTS2) are asynchronous and the relative phase of their clock signals is unknown.

10. Mobile station (MS) adapted to communicate by time-division multiple access with base transceiver stations (BTS) of a cellular mobile radio network, said mobile station (MS) comprising signal transceiver means (60, 65) and receiving a timing advance (TA) when it moves from a first cell (C1) corresponding to the geographical coverage area of a first station (BTS1) with which said mobile station (MS) is communicating to a second cell (C2) corresponding to the geographical coverage area of a second station (BTS2), characterised in that it further comprises:
- means (61) for detecting an instruction (HO CHN) transmitted to it by said first station (BTS1) and which tells it that it must interrupt its communication with said first station (BTS1) to send a first sequence of synchronisation signals (HO ACCESS) to said second station (BTS2) and that it must continue to communicate with said first station (BTS1) immediately after sending said first sequence of synchronisation signals (HO ACCESS) to said second station (BTS2), and
- means (62) for detecting a control signal (HO CMD (TA)) transmitted to it by said first station (BTS1) and containing said timing advance (TA).

11. Mobile station according to claim 10 characterised in that it further comprises means (63) for deciding to send a second sequence of synchronisation signals (HO ACCESS) to said second station (BTS2) when it receives said control signal (HO CMD (TA)) containing said timing advance (TA).

12. Base station controller (BSC) for base transceiver stations (BTS) of a time-division multiple access cellular mobile radio network with at least one mobile station (MS), characterised in that said controller (BSC) comprises:
- means (80) for receiving a timing advance (TA) transmitted to it in a message (HO DETECTION (TA)) sent by a second station (BTS2) with which said mobile station (MS) wishes to communicate after a synchronisation message (HO ACCESS) is sent by said mobile station (MS) to said second station (BTS2) when it moves from a first cell (C1) corresponding to the geographical coverage area of a first station (BTS1) with which said mobile station (MS) is communicating to a second cell (C2) corresponding to the geographical coverage area of said second station (BTS2), and
- means (80) for sending a control signal (HO CMD (TA)) to said first station (BTS1), said control signal containing said timing advance (TA) for said mobile station (MS).

13. Controller according to claim 12 characterised in that it further comprises means (83, 84) for sending information (HO DETECT (TA)) containing said calculated timing advance (TA) to a switching centre (MSC), said information transmitted to said switching centre (MSC) being transmitted upon reception of said message (HO DETECTION (TA)) sent by said second station (BTS2).

14. System of exchanging information between a mobile station (MS), at least two base transceiver stations (BTS1, BTS2) and a base station controller (BSC) for said stations (BTS1, BTS2), said exchanges of information between said mobile station (MS) and said stations (BTS1, BTS2) being of the time-division multiple access type, said mobile station (MS) comprising means (61) for detecting an instruction (HO CHN) telling it when it moves from a first cell (C1) corresponding to the geographical coverage area of a first station (BTS1) with which said mobile station (MS) is communicating to a second cell (C2) corresponding to the geographical coverage area of a second station (BTS2) that it must send a sequence of synchronisation signals (HO ACCESS) to said second station (BTS2), said second station (BTS2) comprising means (71) for calculating a timing advance (TA) to be supplied to said mobile station (MS),
characterised in that said mobile station (MS) is adapted to continue to communicate with said first station (BTS1) immediately after sending said sequence of synchronisation signals (HO ACCESS) to said second station (BTS2),
in that said second station (BTS2) includes means (70) for sending said calculated timing advance (TA) to said controller (BSC),
in that said controller (BSC) comprises means (80) for sending said calculated timing advance (TA) to said first station (BTS1),
and in that said first station (BTS1) comprises means (70) for forwarding said calculated timing advance (TA) to said mobile station (MS).

15. System of exchanging information in a cellular mobile radio network between a mobile station (MS), a first base transceiver station (BTS1) associated with a first base station controller (BSC1) and a second base transceiver station (BTS2) associated with a second base station controller (BSC2), said controllers (BSC1, BSC2) being controlled by the same mobile services switching centre (MSC), said exchanges of information between said mobile station (MS) and said stations (BTS1, BTS2) being of the time-division multiple access type, said mobile station (MS) comprising means (61) for detecting an instruction (HO CHN) telling it when it moves from a first cell (C1) corresponding to the geographical coverage area of said first station (BTS1) with which said mobile station (MS) is communicating to a second cell (C2) corresponding to the geographical coverage area of said second station (BTS2) that it must send a sequence of synchronisation signals (HO ACCESS) to said second station (BTS2) which comprises means for calculating a timing advance (TA) to be supplied to said mobile station (MS),
characterised in that said mobile station (MS) is adapted to continue to communicate with said first station (BTS1) immediately after sending said sequence of synchronisation signals (HO ACCESS) to said second station (BTS2),
in that said second station (BTS2) comprises means (70) for sending said calculated timing advance (TA) to said switching centre (MSC) via said second controller (BSC2),
in that said switching centre (MSC) comprises means (90) for sending said calculated timing advance (TA) to said first controller (BSC1),
in that said first controller (BSC1) comprises means (80) for sending said calculated timing advance (TA) to said first station (BTS1),
and in that said first station (BTS1) comprises means (70) for forwarding said calculated timing advance (TA) to said mobile station (MS).
